# EUROPÄISCHE PATENTSCHRIFT

(11) **EP 3 283 451 B1**
(45) Veröffentlichungstag und Bekanntmachung des Hinweises auf die Patenterteilung: **04.01.2023**
(21) Anmeldenummer: 16714914.5
(22) Anmeldetag: 07.04.2016
(51) Int. Cl.: C05C 3/00, C05C 11/00, C05G 3/00

(54) **DÜNGEMITTEL ENTHALTEND AMMONIUMHYDROGENCARBONAT**
FERTILIZER CONTAINING AMMONIUM HYDROGEN CARBONATE
ENGRAIS CONTENANT DU BICARBONATE D'AMMONIUM

(30) Priorität: 14.04.2015 DE 102015105649
(43) Veröffentlichungstag der Anmeldung: 21.02.2018
(73) Patentinhaber: Tischmacher, Heinz, 68723 Plankstadt (DE)
(72) Erfinder: Tischmacher, Heinz, 68723 Plankstadt (DE)
(74) Vertreter: Hamel, Armin
(86) Internationale Anmeldenummer: PCT/EP2016/057612
(87) Internationale Veröffentlichungsnummer: WO 2016/166010

(56) Entgegenhaltungen:
- WO-A1-96/27288
- CN-A- 1 050 178
- CN-A- 1 081 434
- CN-A- 1 089 932
- CN-A- 1 235 944
- GB-A- 896 284
- US-A1- 2011 174 032
- WANG Z: "Tea fertilizer comprises ammonium bicarbonate, humic acid, sodium chloride, ammonium molybdate, soil modifier, yeast, radix sophorae flavescentis, potassium sulfate, disodium hydrogen phosphate, Bacillus and Lactobacillus", WPI / THOMSON,, Bd. 2015, Nr. 11, 17. Dezember 2014 (2014-12-17), XP002750973,

## Beschreibung

Die Erfindung betrifft ein Düngemittel enthaltend Ammoniumhydrogencarbonat sowie mindestens ein Additiv zum Binden des NH₃- und des CO₂-Anteils von ABC im festen und/oder im gelösten Zustand.

Stickstoff enthaltende Dünger gelten als die wichtigsten Düngerformen, da Stickstoff wesentlich für das Pflanzenwachstum ist. Dabei können Pflanzen den Stickstoff als Nitrat, Ammonium sowie Harnstoff direkt aufnehmen. Grundsätzlich unterscheidet man zwischen anorganischen und organischen Stickstoffdüngern.

Ein Düngemittel, bei dem Ammonium den Pflanzen direkt bereitgestellt wird, ist Ammoniumhydrogencarbonat (auch bezeichnet als: Ammoniumbicarbonat = ABC). Dieses Düngemittel wird bisher jedoch nur in China in großen Mengen hergestellt und auch eingesetzt. Problematisch bei Ammoniumhydrogencarbonat ist, dass sich diese Verbindung bereits ab 60°C vollständig zersetzt, so dass Ammoniumhydrogencarbonat in der Regel bei 15°C in geschlossenen Räumen gelagert wird, um eine Zersetzung der Verbindung zu vermeiden.

Die Verwendung dieses Düngemittels wird in CN 1053225 A beschrieben. Dabei wird dem Ammoniumhydrogencarbonat zumindest ein Additiv zugesetzt. Wird als Additiv Dicyanamid eingesetzt, so wirkt dieses Additiv sowohl als Nitrat-Reduktase-Inhibitor als auch als ein Vernetzer. Da das Additiv auch ein Vernetzer ist, kann das Düngemittel länger gelagert werden, weil sich das Ammoniumhydrogencarbonat nicht so schnell zersetzt.

Die in CN 1053225 A beschriebenen Additive sind jedoch nicht so leicht herzustellen und sind giftig oder zumindest gesundheitsschädlich.

Weiterhin sind aus CN 104261962 A sowie CN 104478533 A Düngemittel bekannt, die Ammoniumhydrogencarbonat als Nebenbestandteil enthalten.

Aufgabe der vorliegenden Erfindung ist es daher, ein Düngemittel enthaltend Ammoniumhydrogencarbonat sowie mindestens ein Additiv bereitzustellen, wobei das Additiv preiswert erhalten werden kann und ungiftig ist.

Diese Aufgabe wird nach den Merkmalen des Patentanspruchs 1 gelöst. [A1] Die Erfindung betrifft somit ein Düngemittel enthaltend NH₄HCO₃ (ABC) als Hauptbestandteil, wobei dem Düngemittel als Additiv mindestens 5 bis 10 Massenprozent Biokohle und/oder 1 bis 21 Massenprozent TiO₂, Gelatine und/oder Ligninsulfonsäure als Kompatierungsmittel und/oder 1 bis 10 Massenprozent Peroxid und/oder Permanganat als Oxidationsmittel und/oder 1 bis 10 Massenprozent Cellulosederivat enthält.

Biokohle verbessert insbesondere die Lagereigenschaften des Düngemittels, weil Biokohle als Absorber für CO₂, H₂O bzw. NH₃ dient, falls sich das Ammoniumhydrogencarbonat (ABC) zersetzt. Zudem verbessert die Biokohle die Bodeneigenschaften. 5 - 10 Massenprozent an Biokohle werden zugesetzt.

Zusätzlich können die Lagereigenschaften des Düngemittels durch Hinzugabe von 1 - 10 Massenprozent, vorzugsweise 3 - 7 Massenprozent, von mindestens einem Cellulosederivat verbessert werden. Dem Düngemittel können auch 5 - 20 Massenprozent an nicht oxidierenden anorganischen Salzen, zum Beispiel nicht oxidierende Magnesiumsalze, beigemengt werden. Als Magnesiumsalze eignen sich beispielsweise Olivin, Mg₃(PO₄)₂ und/oder Mg₂SiO₄. Durch Zugabe dieser Salze wird das CO₂ des ABC in Form von MgCO₃ bzw. Mg(HCO₃)₂ gebunden. Wird als nicht oxidierendes Magnesiumsalz Mg₃(PO₄)₂ beigemengt, so wird sowohl Kohlendioxid als auch Ammoniak im Boden gebunden. Anstelle eines Magnesiumsalzes kann auch zumindest ein Calciumsalz, zum Beispiel CaCO₃, Ca(HCO₃)₂ und/oder Ca₃(PO₄)₂, eingesetzt werden.

Durch Zugabe von Bentonit wird der Verlust an Ammoniak deutlich verringert. Vorzugsweise enthält das Düngemittel 5 - 20 Massenprozent Bentonit.

In der Regel wird das Düngemittel zu Presslingen, zum Beispiel zu Pellets gepresst. Das Kompaktierungsmittel dient dabei dazu, die Stabilität des Düngemittels zu erhöhen.

Da bei der Denitrifikation N₂O entsteht und dieses aus dem Boden entweichen kann, stellt die Denitrifikation eine der Hauptursachen für einen Stickstoffverlust im Boden dar. Deshalb wird dem Düngemittel zumindest ein Oxidationsmittel beigemengt.

Vorzugsweise werden als Oxidationsmittel Peroxidverbindungen eingesetzt, weil Peroxidverbindungen gute Oxidationsmittel sind.

Als Oxidationsmittel können auch Permanganate, insbesondere KMnO₄, eingesetzt werden. Permanganate haben den Vorteil, dass sie ungiftig sind aber dennoch eine ausreichend hohe Oxidationskraft besitzen.

Das Kompaktierungsmittel ist Gelatine, TiO₂ und/oder Ligninsulfonsäure. Durch Zugabe dieser Kompaktierungsmittel wird die Stabilität des Düngemittels deutlich erhöht. Der Massenanteil w an Kompaktierungsmittel beträgt w = 1 - 21. Vorzugsweise betragen die Massenanteile an Ligninsulfonsäure und auch an TiO₂ 3 - 6, wobei das Düngemittel eine besonders hohe Stabilität aufweist, wenn der Massenanteil an Ligninsulfonsäure etwa 5 beträgt. Die Gelatine kann dabei in flüssiger Form oder als Pulver hinzugeben werden. Wird flüssige Gelatine eingesetzt, so muss das Düngemittel anschließend noch getrocknet werden.

[A2] Vorzugsweise wird die Biokohle mit einer anorganischen Säure imprägniert. Ist diese Biokohle mit einer anorganischen Säure imprägniert, so kann das Düngemittel mit dieser Biokohle insbesondere in basischen Böden eingesetzt werden. Ferner hat dies den Vorteil, dass die Säure NH₃ als NH₄⁺ bindet, wodurch NH₃ nicht ausgasen kann.

[A3] Vorteilhafterweise ist diese anorganische Säure H₃PO₄ und/oder H₂SO₄, weil die Anionen dieser Säuren wichtige Nährstoffe für Pflanzen darstellen.

[A04] Das Cellulosederivat ist vorzugsweise ein Celluloseether, weil Celluloseether gut verfügbar und preiswert sind.

[A05] Vorzugsweise handelt es sich bei dem Cellulosederivat um eine Kaliumverbindung von Carboximethylcellulose, weil Kalium ein wichtiges Nährelement für Pflanzen ist.

[A06] Besonders bevorzugt sind Erdalkaliperoxide, da diese recht preiswert sind.

[A07] Als Erdalkaliperoxid wird bevorzugt MgO₂ und/oder CaO₂ eingesetzt, da die Ca²⁺- bzw. die Mg²⁺-Kationen für Pflanzen auch wichtige Nährstoffe darstellen.

Im Folgenden wird die Erfindung anhand von Ausführungsbeispielen näher erläutert.

Das Düngemittel enthält als Hauptbestandteil Ammoniumhydrogencarbonat (ABC = NH₄HCO₃). Damit das in dem Düngemittel enthaltene NH₄HCO₃ über einen längeren Zeitraum - auch bei höheren Temperaturen - gelagert werden kann, kann NH₄HCO₃ als Additiv, zum Beispiel Biokohle, enthalten. Sollte sich NH₄HCO₃ somit in die einzelnen Bestandteile CO₂, H₂O und NH₃ zersetzen, so dient die Biokohle als Absorber für CO₂, H₂O bzw. NH₃. Von Vorteil ist dabei, wenn die Biokohle eine sehr hohe spezifische innere Oberfläche aufweist, weil dadurch eine sehr hohe Beladung erreicht werden kann. Durch Einsatz der Biokohle wird somit verhindert, dass NH₃ bzw. CO₂, die als Zerfallsprodukte entstehen können, in die Atmosphäre gelangen.

Vorteilhaft bei der Biokohle ist ferner, dass die Bodeneigenschaften deutlich verbessert werden können. So verringert Biokohle die Population von denitrifizierenden Bakterien und damit die Bildung von N₂O.

Vorzugsweise ist die Biokohle mit einer anorganischen Säure imprägniert, so dass in der Umgebung der Pflanze der pH-Wert bei 7,2 liegt, so dass NH₃ im Wesentlichen als NH₄⁺ und CO₂ als HCO₃⁻ vorliegt. Bei pH = 7,2 wird somit verhindert, dass CO₂ bzw. NH₃ als Gase entweichen und so dem System, d.h. dem Boden, entzogen werden. Ist die Biokohle mit einer anorganischen Säure imprägniert, so kann diese Biokohle insbesondere in basischen Böden eingesetzt werden. Vorteilhafterweise ist diese anorganische Säure H₃PO₄ und/oder H₂SO₄, weil die Anionen dieser Säuren auch wichtige Nährstoffe für Pflanzen darstellen. Wird die Biokohle beispielsweise mit H₂SO₄ imprägniert, so reagiert NH₃ zu NH₃HSO₄ bzw. (NH₃)₂SO₄.

Zur besseren Lagerfähigkeit kann dem Düngemittel als Additiv zumindest ein Cellulosederivat zugegeben werden. ABC wird von dem Cellulosederivat ummantelt, wobei die hydrophoben Gruppen des Cellulosederivats ABC abschirmen, so dass ABC nicht hydrolysieren kann. Dieses zumindest eine Cellulosederivat kann zusätzlich zur Biokohle im Düngemittel enthalten sein. Als Cellulosederivat dienen vorzugsweise Celluloseether, weil diese Celluloseether gut verfügbar und preiswert sind. Vorzugsweise handelt es sich bei dem Cellulosederivat um eine Kaliumverbindung von Carboximethylcellulose, weil es sich bei Carboximethylcellulose um ein gängiges Cellulosederivat handelt und weil Kalium ein wichtiger Nährstoff für Pflanzen ist.

Sowohl Biokohle als auch Cellulosederivate dienen somit dazu, die Lagerfähigkeit des Ammoniumhydrogencarbonats zu verbessern.

Um dem Problem entgegenzuwirken, dass sich NH₄HCO₃ im feuchten Boden sehr schnell auflöst und dieses der Pflanze somit nicht zur Verfügung steht, enthält das Düngemittel zusätzlich Additive, die den NH₃- und den CO₂-Anteil von NH₄HCO₃ im Boden binden. Wird NH₄HCO₃ in den Boden eingebracht, so ergibt sich durch das Vorhandensein von Huminsäuren und Wasser im Boden folgendes chemisches Gleichgewicht, wobei sowohl die Huminsäuren als auch Wasser das im Boden gelöste NH₃ zu NH₄⁺ protonisieren.

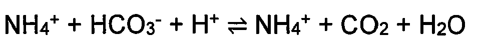

Aus diesem Gleichgewicht ergibt sich, dass gerade bei sauren Böden CO₂ entsteht und als Gas aus dem Boden entweichen kann.

Wird nun als Additiv ein nicht oxidierendes Magnesiumsalz, zum Beispiel Mg₃(PO₄)₂ eingesetzt, so wird sowohl das Kohlendioxid als auch der Ammoniak im Boden gebunden. Mg₃(PO₄)₂ liegt in wässriger Lösung als Mg²⁺ sowie als PO₄³⁻ vor. Dabei wird NH₄⁺ in wässriger Lösung als MgNH₄PO₄ • 6 H₂O ausgefällt.

Mg²⁺ + NH₄⁺ + PO₄³⁻ + 6 H₂O - > MgNH4P04 • 6 H₂O

In Gegenwart einer Säure, z.B. Huminsäure, löst sich MgNH₄PO₄ • 6 H₂O langsam wieder auf. MgNH₄PO₄ • 6 H₂O dient damit als Speicher für NH₄⁺. Anstelle von Mg₃(PO₄)₂ kann aber auch ein anderes Magnesiumsalz in Verbindung mit einem phosphathaltigen Salz verwendet werden. So kann beispielsweise eine Mischung aus MgO und KH₂PO₄ eingesetzt werden, um NH₄⁺ bzw. NH₃ in Form von MgNH₄PO₄ • 6 H₂O zu binden.

Ferner kann durch die Mg²⁺-Ionen eines Magnesiumsalzes HCO₃⁻ bzw. CO₂ abgefangen werden. Dabei kann sich neben MgCO₃ auch Mg(HCO₃)₂ bilden. Durch den Einsatz von Magnesiumverbindungen wird somit verhindert, dass CO₂ in die Atmosphäre gelangen und als Treibhausgas wirken kann.

Es ist aber auch möglich, das in Lösung befindliche HCO₃⁻ bzw. CO₂ durch Magnesiumverbindungen, wie zum Beispiel Olivin oder Mg₂SiO₄ oder einer Mischung aus Olivin und Mg₂SiO₄ abzufangen. Vorteilhafterweise sollte Olivin und/oder Mg₂SiO₄ als feingemahlenes Pulver vorliegen, um eine möglichst große aktive Oberfläche bereitzustellen. Dieses Pulver kann beispielsweise mit ABC vermischt und zu einem Düngerkorn (Pressling) gepresst sein. Denkbar ist jedoch auch, dass ABC in Form gepresster Düngerkörner vorliegt und dass Olivin und/oder Mg₂SiO₄ die Düngerkörner umgibt.

Damit ist für einen Fachmann klar, dass nicht oxidierende Magnesiumsalze wie Olivin und/oder Mg₂SiO₄ auch in Verbindung mit einem phosphathaltigen Salz, zum Beispiel K₂HPO₄ oder K₃PO₄, anstelle von Mg₃(PO₄)₂ eingesetzt werden können, womit sowohl CO₂ als auch NH₃ gebunden werden kann.

Es versteht sich, dass anstelle eines Magnesiumsalzes auch ein Calciumsalz eingesetzt werden kann, um CO₂ abzufangen. Hier kommt insbesondere Calciumphosphat oder eine Mischung aus Calciumphosphat und Magnesiumphosphat als Additiv infrage. Dabei kann ABC von Calciumphosphat bzw. Magnesiumphosphat ummantelt sein, insbesondere dann, wenn ABC als gepresstes Düngerkorn vorliegt.

Auch durch Zugabe von Bentonit kann der Verlust an Ammoniak deutlich verringert werden. So konnten die Ammoniakverluste von ABC durch Zugabe von luftgetrocknetem Bentonit von etwa 62 % auf 34 % und durch Zugabe von mit Wasser gesättigtem Bentonit sogar auf 15 % gesenkt werden.

Von Vorteil ist ferner, wenn das Düngemittel zusätzlich zumindest ein Oxidationsmittel aufweist. Der Massenanteil w des zumindest einen Oxidationsmittels beträgt w = 1 - 10, wobei vorzugsweise maximal 10 Massenprozent an Oxidationsmitteln zugesetzt werden. Bei diesen Oxidationsmitteln handelt es sich um Peroxide und bevorzugt um Erdalkaliperoxide, da Erdalkalimetalle recht einfach herzustellen sind. Dieses mindestens eine Oxidationsmittel wirkt einer Reduktion von Nitrat, das heißt einer Denitrifikation, entgegen.

Besonders bevorzugt sind MgO₂ und/oder CaO₂, da die Ca²⁺- bzw. die Mg²⁺-Kationen für Pflanzen wichtige Nährstoffe darstellen.

Weiterhin bevorzugt sind Permanganate, vorzugsweise KMnO₄, weil Permanganate gute Oxidationsmittel darstellen, die ungiftig und gut zu handhaben sind.

Diese Oxidationsmittel können auch zur Nitrifikation eingesetzt werden. Ob die Oxidationsmittel, zum Beispiel Peroxide oder Permanganate, zur Denitrifikation oder zur Nitrifikation eingesetzt werden, hängt von ihrer Konzentration und von dem Boden (zum Beispiel vom pH-Wert des Bodens), in welchen das Düngemittel eingebracht werden soll, ab.

Als Nitrofikationshemmer kann beispielsweise auch Dicyandiamid eingesetzt werden.

Das Düngemittel kann zwar pulverförmig sein, jedoch liegt es vorzugsweise in Form von Presslingen vor. Liegt das Düngemittel in Form von Presslingen vor, so haben diese vorzugsweise die Form von Pellets. Presslinge haben gegenüber von pulverförmigem Düngemittel den Vorteil, dass es beim Ausbringen des Düngemittels nicht zur Staubentwicklung kommt. Dabei hat es sich als besonders vorteilhaft herausgestellt, wenn das Düngemittel etwa 4 bis 8 cm, vorzugsweise etwa 6 cm, unterhalb der Erdoberfläche eingebracht wird, weil es dann einen besonders hohen Wirkungsgrad aufweist.

Besonders stabil wird das Düngemittel, wenn es in Form von Presslingen vorliegt und einen Massenanteil w von w = 1 - 21 Kompaktierungsmittel enthält. Als Kompaktierungsmittel eignen sich Gelatine, TiO₂ und/oder Ligninsulfonsäure. Vorzugsweise betragen die Massenanteile an Ligninsulfonsäure und auch an TiO₂ w = 3 - 6. Eine besonders hohe Stabilität weist das Düngemittel dann auf, wenn die Ligninsulfonsäure einen Massenanteil von etwa 5 aufweist. Die Gelatine kann dabei in flüssiger Form oder als Pulver dem Düngemittel hinzugeben werden. Wird Gelatinelösung eingesetzt, so muss das Düngemittel anschließend noch getrocknet werden. Vorzugsweise enthält das Düngemittel 15 - 21 Massenprozent an Gelatinelösung bzw. 1 - 10 Massenprozent an Gelatinepulver.

Im Folgenden werden einige Varianten des Düngemittels enthaltend ABC und mindestens ein Additiv tabellarisch dargestellt.

| Massenanteil w des Additivs | | | | | | | |
|---|---|---|---|---|---|---|---|
| Varianten | Bentonit | Biokohle | Gelatine (Pulver) | Gelatine (Lösung) | TiO₂ | Ligninsulfonsäure | Magnesiumsalze |
| 1 | 5 | | 2 | | | | |
| 2 | 10 | | 2 | | | | |
| 3 | 10 | | 2 | | | | |
| 4 | 5 | | 7 | | | | |
| 5 | 5 | | | | | 5 | |
| 6 | 10 | | 7 | | | | |
| 7 | 10 | | | | | 5 | |
| 8 | 20 | | 7 | | | | |
| 9 | 5 | | | 21 | | | |
| 10 | 5 | | | | 5 | | |
| 11 | 5 | | | 17 | 4 | | |
| 12 | 10 | | | 20 | 4 | | |
| 13 | 20 | | | 16 | 4 | | |
| 14 | 10 | | | | | 5 | |
| 15 | | 5 | | | | 5 | |
| 16 | | 5 | 7 | | | | |
| 17 | | 10 | | | | 5 | |
| 18 | | 10 | 7 | | | | |
| 19 | | 20 | | | | | |
| 20 | | | | | | 5 | 5 |
| 21 | | | | | | 5 | 10 |
| 23 | | | | | | 5 | 20 |
| 24 | | | | | | | 5 |
| 25 | | | | | | | 10 |
| 26 | | | | | | | 20 |

Der Massenanteil w der Additive bezieht sich stets auf die Gesamtmasse des Düngemittels, wobei der Rest ABC ist. Die Variante 24 würde somit 5 Massenprozent Magnesiumsalze und 95 Massenprozent ABC enthalten. Es versteht sich, dass die oben aufgeführten Varianten zusätzlich noch ein Oxidationsmittel, Cellulosederivate und/oder Calciumsalze enthalten können.

Die Varianten 5, 7, 16 und 21, die Ligninsulfonsäure enthalten, sind dabei besonders stabil.

## Patentansprüche

1. Düngemittel enthaltend Ammoniumhydrogencarbonat (ABC) als Hauptbestandteil sowie mindestens ein Additiv zum Binden des NH₃- und des CO₂-Anteils von ABC im festen und/oder im gelösten Zustand, **dadurch gekennzeichnet, dass** das Düngemittel als Additiv mindestens 5 bis 10 Massenprozent Biokohle und/oder 1 bis 21 Massenprozent TiO₂, Gelatine und/oder Ligninsulfonsäure als Kompaktierungsmittel und/oder 1 bis 10 Massenprozent Peroxid und/oder Permanganat als Oxidationsmittel und/oder 1 bis 10 Massenprozent Cellulosederivat enthält.

2. Düngemittel nach Patentanspruch 1, **dadurch gekennzeichnet, dass** die Biokohle mit einer anorganischen Säure imprägniert ist.

3. Düngemittel nach Patentanspruch 2, **dadurch gekennzeichnet, dass** die anorganische Säure H₃PO₄ und/oder H₂SO₄ ist.

4. Düngemittel nach Patentanspruch 1, **dadurch gekennzeichnet, dass** das Cellulosederivat ein Celluloseether ist.

5. Düngemittel nach Patentanspruch 4, **dadurch gekennzeichnet, dass** der Celluloseether eine Kaliumverbindung von Carboximethylcellulose ist.

6. Düngemittel nach Patentanspruch 1, **dadurch gekennzeichnet, dass** das Peroxid ein Erdalkaliperoxid ist.

7. Düngemittel nach Patentanspruch 6, **dadurch gekennzeichnet, dass** das Erdalkaliperoxid MgO₂ und/oder CaO₂ ist.

## Claims

1. Fertilizer comprising ammonium hydrogen carbonate (ABC) as the main component as well as at least one additive for binding the NH₃- and the CO₂-fraction of ABC in the solid and/or dissolved state, **characterized in that** the fertilizer comprises as the additive at least 5 to 10 percent by mass biochar and/or 1 to 21 percent by mass TIO₂, gelatin and/or lignosulfonic acid as a compacting agent and/or 1 to 10 percent by mass peroxide and/or permanganate as an oxidizing agent and/or 1 to 10 percent by mass cellulose derivative.

2. Fertilizer as in Claim 1, **characterized in that** the biochar is impregnated with an inorganic acid.

3. Fertilizer as in Claim 2, **characterized in that** the inorganic acid is H₃PO₄ and/or H₂SO₄.

4. Fertilizer as in Claim 1, **characterized in that** the cellulose derivative is a cellulose ether.

5. Fertilizer as in Claim 4, **characterized in that** the cellulose ether is a potassium compound of carboxy methyl cellulose.

6. Fertilizer as in Claim 1, **characterized in that** the peroxide is an alkaline earth peroxide.

7. Fertilizer as in Claim 6, **characterized in that** the alkaline earth peroxide is MgO₂ and/or CaO₂.

## Revendications

1. Engrais contenant de l'hydrogénocarbonate d'ammonium (ABC) en tant que composant principal ainsi qu'au moins un additif pour la liaison de la partie NH₃ et de la partie CO₂ d'ABC à l'état solide et/ou à l'état dissous, **caractérisé en ce que** l'engrais contient en tant qu'additif au moins 5 à 10 pour cent en masse de biocharbon et/ou 1 à 21 pour cent en masse de TiO₂, de gélatine et/ou d'acide lignosulfonique en tant qu'agent de compactage et/ou 1 à 10 pour cent en masse de peroxyde et/ou de permanganate en tant qu'agent oxydant et/ou 1 à 10 pour cent en masse de dérivé de cellulose.

2. Engrais selon la revendication 1, **caractérisé en ce que** le biocharbon est imprégné d'un acide inorganique.

3. Engrais selon la revendication 2, **caractérisé en ce que** l'acide inorganique est H₃PO₄ et/ou H₂SO₄.

4. Engrais selon la revendication 1, **caractérisé en ce que** le dérivé de cellulose est un éther de cellulose.

5. Engrais selon la revendication 4, **caractérisé en ce que** l'éther de cellulose est un composé de potassium d'une carboxyméthylcellulose.

6. Engrais selon la revendication 1, **caractérisé en ce que** le peroxyde est un peroxyde alcalino-terreux.

7. Engrais selon la revendication 6, **caractérisé en ce que** le peroxyde alcalino-terreux étant MgO₂ et/ou CaO₂.
